(19) Europäisches Patentamt
European Patent Office
Office européen des brevets

(11) **EP 4 712 700 A1**

(12) **EUROPEAN PATENT APPLICATION**
published in accordance with Art. 153(4) EPC

(43) Date of publication:
**18.03.2026 Bulletin 2026/12**

(21) Application number: **24803140.3**

(22) Date of filing: **09.05.2024**

(51) International Patent Classification (IPC):
**H05B 45/44** (2020.01)     **G06N 3/126** (2023.01)
**F21S 8/00** (2006.01)

(52) Cooperative Patent Classification (CPC):
**F21S 8/00; G06N 3/126; H05B 45/44**

(86) International application number:
**PCT/ES2024/070283**

(87) International publication number:
**WO 2024/231589 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.05.2023 ES 202330363**

(71) Applicant: **Universidad Carlos III de Madrid
28919 Leganés - Madrid (ES)**

(72) Inventors:
• **RODRÍGUEZ-GUERRA DE LEÓN, Marta
28919 LEGANÉS Madrid (ES)**
• **VERGAZ BENITO, Ricardo
28919 LEGANÉS Madrid (ES)**
• **LÓPEZ FRAGUAS, Eduardo
28919 LEGANÉS Madrid (ES)**

(74) Representative: **Clarke, Modet y Cía., S.L.
C/ Suero de Quiñones 34-36
28002 Madrid (ES)**

(54) **COMPUTER-IMPLEMENTED METHOD FOR DETERMINING THE OPTIMAL CONFIGURATION OF A LIGHT FIXTURE FORMED BY LEDS**

(57)     The invention discloses a computer-implemented method for determining the optimal configuration of a light fixture (1) formed by LEDs (2), It aims to obtain a desired spectral irradiance curve over an area to be irradiated (3), where the light fixture (1) lacks additional optical elements to its own LEDs (2). This method comprises: building an objective function that calculates a spectral irradiance curve at various points of the area to be irradiated (3) corresponding to a specific configuration of said light fixture (1); applying a genetic algorithm to optimize the objective function with the aim of fulfilling objectives, using only LEDs (2) from a default led (2) database; and obtaining the optimal configuration of the light fixture (1), which includes the optimal total number of LEDs in the light fixture, as well as the type, position and current intensity passing through the same for each of said LEDs (2).

**FIG. 1**

**Description**

**Object of the invention**

The present invention falls within the field of illumination, and in particular of illumination by means of LEDs.

The object of the present invention is a computer-implemented method that allows to design a light fixture with a desired illumination pattern, both spectral and spatial. As will be described in detail below, the light fixture is defined by the number, type, position and intensity of current that passes through the LEDs that make it up.

**Background of the invention**

Currently, light fixtures formed by LEDs that are used for illumination in very different contexts are well known. By way of example, reference may be made to the light fixture described in document ES2507440A1, which is particularly designed as an emergency light fixture for use in tunnels.

In this context, controlled emission patterns with certain spectral and spatial characteristics are frequently required. To do this, currently the most common solution is to add additional optics to the light fixtures that allow controlling the emission (filters to control the spectral dimension, lenses and diffusers for the spatial aspect). Document WO2013105046A1 describes a light fixture provided with a diffusing lens and a plurality of optical elements for redirecting the light emitted by the LEDs.

However, the need to use additional optical elements such as lenses and the like has the drawback that it implies an increase in complexity in the manufacturing processes of the devices and, consequently, an increase in cost.

In view of this, it would be ideal to have a method that would allow finding a suitable solution for each case using only commercial LEDs without the need for filters. This solution would allow obtaining a objective emission pattern by combining commercial led devices, only playing with their spatial distribution in the light fixture and with the current intensity at which they are fed, without the need to use any type of additional optical element.

**Description of the invention**

The inventors of the present invention have developed a computer-implemented method that allows to determine the configuration of a light fixture to homogeneously irradiate a determined area with a desired illumination spectral pattern using only LEDs selected from a predefined set of available LEDs. The light fixture obtained allows to generate a desired irradiance curve over the area to be irradiated without the need to add additional optical elements to the LEDs themselves, that is, without the need to use filters or lenses and, in addition, using only LEDs contained in a database of available LEDs. This is very advantageous, as it makes it possible to manufacture *ad hoc* light fixtures for different applications in a much simpler and more versatile way than through the application of filters or lenses.

The inventive method fundamentally comprises the following steps:

1. Building an objective function that calculates, depending on the geometry of the light fixture and the area to be irradiated, and on a configuration of the light fixture that includes the total number of LEDs of the light fixture as well as, for each of said LEDs, the type, position and intensity of current that passes through it, a spectral irradiance curve at various points of the area to be irradiated that corresponds to said configuration of the light fixture.

The data about the geometry of the light fixture and the area to be irradiated define the shape, size and relative position of both elements, and are both established at the beginning of the search process for the optimal light fixture. The light fixture geometry and area to be irradiated may be defined using any suitable reference system, although a Cartesian reference system is typically employed. In principle, the light fixture and the area to be irradiated may have different shapes, although according to a particularly preferred embodiment of the invention the light fixture is flat and the area to be irradiated is also flat, both elements being located in parallel planes.

As mentioned, the light fixture configuration includes the total number of LEDs of the light fixture as well as, for each of said LEDs, the type, position and current intensity that passes through it. That is, the light fixture can be assimilated to a surface on which LEDs are located in different positions. A given light fixture configuration comprises information relating to the number of LEDs used, the type of LED located in each particular position of the light fixture, and the current intensity through each of these LEDs. Naturally, LEDs that are powered with the same or similar current currents can be electrically grouped.

Optionally, other additional restrictions may also be set, such as for example one or more of the following:

- A restriction relating to a minimum permitted distance between LEDs. Thus, as a result of the process, LEDs that must be closer to each other than their own physical size allows are avoided.

- A restriction relating to a maximum number of LEDs in the light fixture. In this way, solutions with excessive numbers of LEDs that have little practical application are avoided.

2. Apply a genetic algorithm to optimize the objective function in order to minimize a deviation between the calculated spectral irradiance curve and the desired spectral irradiance curve, as well as a spatial inhomogeneity of the calculated irradiance curve at said points of the plane to be irradiated, the light fixture comprising only LEDs from a predetermined LED database.

To carry out this step, we first assume a set of initial configurations of the light fixture, which we will call the initial population, in which we will call each configuration 'individual'. This initial population can be determined, for example, by randomly choosing, for each of the individuals in the population, a certain number of LEDs of different types, positions where said LEDs are located, and current intensities that feed said LEDs. Since the geometry of the light fixture and the area to be irradiated are known, since they are fixed from the beginning of the process, it is possible to use the objective function to determine the spectral irradiance curve that corresponds to these particular light fixture configurations.

Once the spectral irradiance curve has been obtained for each individual of the aforementioned population, the objective function provides as a result, for each configuration of the population:

- The difference between the calculated spectral irradiance curve and the desired spectral irradiance curve at each point of the area to be irradiated, which allows ensuring that the solution obtained sufficiently resembles the desired objective.

- The inhomogeneity of the spectral irradiance curve calculated for the points of the area to be irradiated determined above. More specifically, the irradiance at each of said points is calculated, and then the highest value and the lowest value are selected. Inhomogeneity is calculated taking into account these two values.

The main objective of the optimization process is to minimize these quantities. In addition to this objective for maximum deviation and maximum inhomogeneity, it is possible to apply additional objectives. For example, a further objective could be to reach a minimum value of the desired spectral coverage, being defined as the existence of a certain minimum of irradiance in each subrange of wavelengths within a desired spectral range.

In short, it is checked here whether the spectral irradiance curve obtained for each of the individuals in the population meets the objectives mentioned at the points of the area to be irradiated defined. These points are normally arranged uniformly distributed throughout the area to be irradiated in order to ensure as far as possible that said objectives are also met over the majority of said surface.

If the solution meets the stated conditions, it is considered the optimal solution. Otherwise, the process established in the genetic algorithm used is continued, applying transformations on the individuals of the population, and iteration is continued until an optimal solution is reached.

In principle, different types of genetic algorithms could be used to find a solution to the problem posed. However, given the type of variables (mixture of integers and continuous), the fact that there are several objectives to minimize (at least two: deviation from the desired curve and maximum spatial inhomogeneity), and that between the constraints there is at least one linear restriction (maximum number of LEDs), an NSGA (Non-dominated Sorting Genetic Algorithm) type genetic algorithm is preferably used.

Finally, it is important to note that, during the application of the genetic algorithm, the LEDs that are selected to be part of each light fixture in each of the iterations are only LEDs from a predetermined led database. This default led database may correspond to certain commercially available led models. The database may include the spectral and angular radiation patterns of the LEDs, as well as any other data relevant in this context. This data can be obtained, for example, from the data sheets corresponding to each type of LED included in the database. Naturally, this database can be easily expanded by adding new models of LEDs as they become commercially available.

3. Obtain the optimal configuration of the light fixture, which includes the optimal total number of LEDs of the light fixture as well as, for each of these LEDs, the type, position and intensity of current that passes through it.

Once the genetic algorithm converges to an acceptable solution, the result obtained is a light fixture configuration that constitutes the optimal configuration.

In short, the result of this process is an optimal configuration of the light fixture that allows obtaining a spectral irradiance curve close to that desired and that, in addition, presents sufficient spatial homogeneity in the area to be irradiated. Naturally, a last step of this procedure would be said manufacture of said optimal light fixture.

The present invention is also directed to a computer program comprising instructions which, when the program is executed by a computer, cause the computer to carry out the method described in the preceding paragraphs. The program may be in the form of source code, object code, an intermediate source of code, and object code, for example, as in partially compiled form, or in any other form suitable for use in practicing the processes according to the invention.

The present invention is also directed to a computer-readable storage medium comprising instructions which, when executed by a computer, cause the computer to carry out the method described in the preceding paragraphs. The storage medium may be any entity or device capable of supporting the program. For example, the storage medium could include ROM memory, a CD ROM memory or a semiconductor ROM memory, or a magnetic recording medium such as a floppy disk or a hard disk, an integrated circuit in which the program is implemented, etc. Alternatively, the storage medium could be a transmittable carrier, for example, an electrical or optical signal transportable through electrical or optical cable, by radio or by any other means.

**Brief description of the figures**

Fig. 1 shows a schematic perspective of the light fixture and the area to be irradiated according to an example of the present invention.

Fig. 2 shows a schematic view of the positions that the LEDs can occupy in the light fixture of this example of the invention.

Fig. 3 shows the spectral irradiance curve corresponding to each of the LEDs of the LED database used in this example of the invention, as well as the shape of the objective solar spectrum AM1.5G.

Fig. 4 shows the angular irradiance curve corresponding to each of the LEDs of the LED database used in this example of the invention.

Figs. 5a and 5b show a schematic plan view of the position of the control points in the area to be irradiated used when defining the objectives 1 (Fig. 5b), 2 (Fig. 5a) and 3 (Fig. 5b).

Fig. 6 shows a schematic plan view of the position of the LEDs in the optimal light fixture, as well as the position of the area to be irradiated and its control points.

Figs. 7a and 7b respectively show the total irradiance deviation in each region of the area to be irradiated and the number of invalid spectral ranges in each region of the area to be irradiated.

Fig. 8 shows the calculated irradiance curve (blue) and the desired irradiance curve (red), which corresponds to the solar spectrum AM1.5G. The insertion shows the deviation of the proportion of radiation in each spectral range of the calculated curve with respect to the proportion that exists in the solar spectrum.

**Preferential embodiment of the invention**

To illustrate in more detail what the proposed method consists of, it is described below step by step through a particular example of application.

**1. Problem Definition, Geometry, Constraints, and Database**

It is desired to obtain a light fixture (1) that provides in an area to be irradiated (3) a radiation curve similar to solar irradiance. Hereinafter, the desired irradiance curve is referred to as AM1.5G, which is the designation conventionally assigned to the standard spectrum at the Earth's surface.

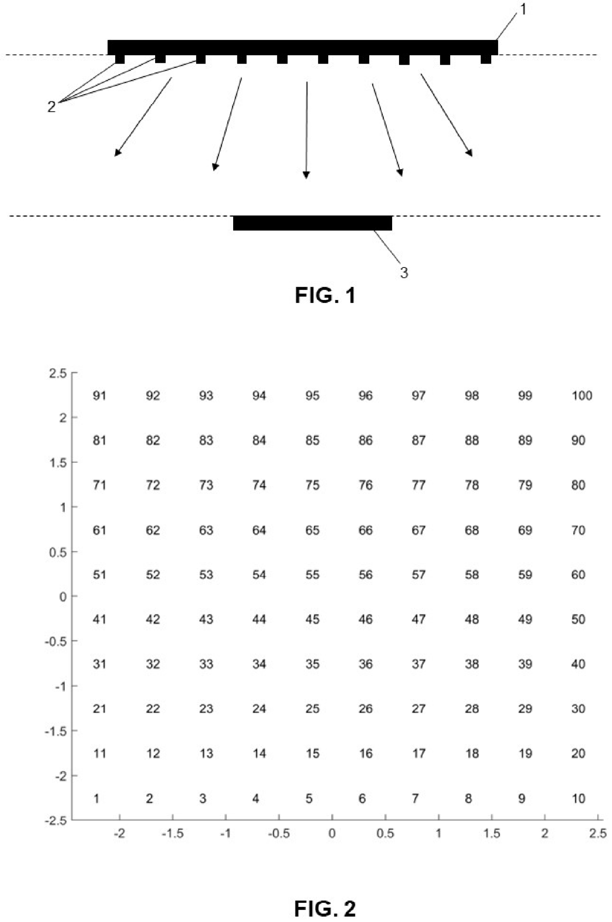

The light fixture (1) is contained in a plane 5 cm apart from a parallel plane in which the area to be irradiated (3) is contained. The light fixture (1) has dimensions of 5 x 5 cm, while the area to be irradiated (3) has dimensions of 1 x 1 cm and is in a centered position relative to said light fixture (1). Fig. 1 shows schematically the geometric data relating to the light fixture (1) and the area to be irradiated (3).

A minimum distance between LEDs (2) of 0.5 cm is set as an additional restriction. To implement this restriction, a 5x5 mesh is used in the plane of the light fixture (1) that respects this minimum separation, resulting in 100 discrete positions numbered in the manner shown in Fig. 2. An additional restriction is also established that limits the number of LEDs (2) of the light fixture to a maximum of 40.

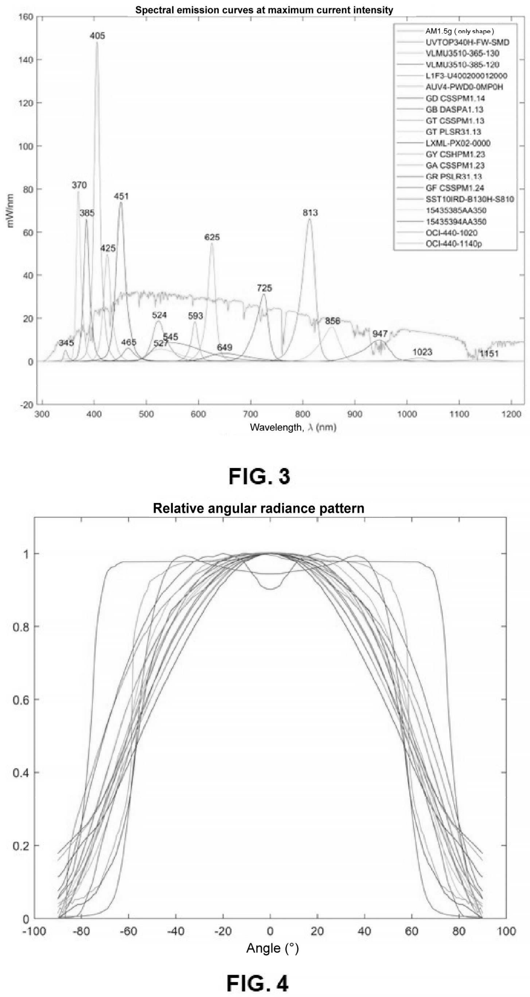

For this example, a database of commercial LEDs (2) currently in stock comprising 19 different LED models (2) is used. Each of these LEDs (2) emits at different ranges, with the spectral and angular radiation pattern emitted by each LED (2) stored in said database. Figs. 3 and 4 respectively show the spectral and angular emission patterns corresponding to the LEDs (2) of the database.

## 2. Definition of the objective function

In accordance with the provisions of the invention, the objective function is built in order to minimize it by means of the genetic algorithm to obtain the desired light fixture (1). The variables of this function are:

a) The number of LEDs (2) used of each of the 19 types stored in the database. It is a range integer variable [0,40],
b) The current intensity that powers each group of LEDs (2). A group is defined as a set of LEDs (2) of the same type that, in addition, are powered by the same intensity. This facilitates the building of the light fixture (1) in actual practice. It is a continuous variable of range $[I_{min}, I_{max}]$ (according to the parameters corresponding to each type of LED).
c) The position in the mesh of each of the LEDs (2) used. It is an integer variable of range [1,100] (according to the distribution shown above).

A vector of variables is created according to the above definition, each vector being the exact description of a light fixture (1), which we will call an individual. An example of a vector of variables of the function would be the following:

$$Ind = [\,1\ 0\ 0\ 2 \ldots 8\ ;\ 220\ 351\ 400.02\ 611.3 \ldots 21.4\ ;\ 21\ 30\ 78\ 2 \ldots 22\,]$$

1 LED of the first type
0 LEDs of the second type

220 mA for LEDs of the first type
351 mA for LEDs of the second type

First LED in position 21
Second LED in position 30

No. of LEDs of each type

Current intensity associated with all LEDs of each type

Position assigned to each single LED

This vector is formed as described below:

- The first set of elements defines the number of LEDs (2) of each type that the light fixture (1) has. In this particular case, the initial series of numbers 1 0 0 2 ... 8 indicates that the light fixture has 1 LED of the first type, 0 LEDs of the second and third types, 2 LEDs of the fourth type, etc.

- The second set of elements (220 351 400.02 611.3 ... 21.4) describes the current intensity associated with each type of LED (2). In this case, intensities of 220 mA are assigned to the set of LEDs of the first type, 351 mA to the set of LEDs of the second type (although in this case there are no), etc.

- The third set of elements (21 30 78 2... 22) describes the spatial distribution of the single LEDs (2) in the light fixture (1). In this case, the first led (which would be of the first type) would be placed in position 21, the next two (which would be of the fourth type) in positions 30 and 78, and so on until the total number of LEDs of this particular individual is completed.

This vector allows to perform the irradiance calculation as described in the invention, since it already perfectly describes the light fixture (1). The next step is to establish the values that you want to achieve in the parameters of the objective function, in order to minimize the difference.

In this specific problem, when designing a solar simulator, it is sought that it meets the current standard to be classified as A+A+ in terms of spatial uniformity and spectral coherence. In addition, it is desired to have a total irradiance (in mW/cm$^2$) similar to that of the spectrum AM1.5G. This defines the three objectives:

a) OBJ1: a certain maximum spatial non-uniformity in the area to be irradiated (3) (specifically, the standard requires less than 1% for class A+).

b) OBJ2: a certain mean deviation with respect to the total irradiance of the sun (the standard does not have a criterion in this regard, but it will be established that it is less than 5%).

c) OBJ3: a certain deviation of the proportion of spectral radiation with respect to that of the ideal radiation spectrum (specifically, the standard requires that the coupling must be between 0.875 and 1.125, where 1 would be equivalent to the same proportion of radiation as in the case of the sun) between the 6 ranges listed in the following table:

**Wavelength range**

| nm |
| --- |
| 300 to 470 |
| 470 to 561 |
| 561 to 657 |
| 657 to 772 |
| 772 to 919 |
| 919 to 1200 |

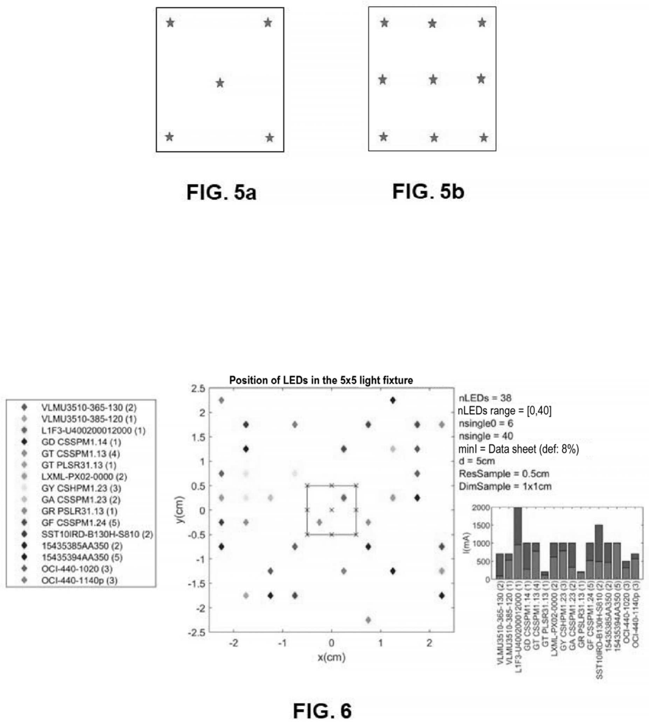

To establish these objectives mathematically, measurement points are defined in the area to be irradiated (3) that allow monitoring compliance with these conditions. To be as close to the norm as possible, 5 cross-shaped points are established for the second objective (OBJ2) and 9 points for the first and third objectives (OBJ1 and OBJ3), as shown in Figs. 5a and 5b. This choice is based on the fact that the second objective is not as demanding as the other two, and it is enough to minimize it more approximately.

We proceed to mathematically define the three objectives, thus quantifying the deviation from the ideal light fixture (1) sought:

**Objective 1,** which will account for spatial non-uniformity, is calculated through the difference between the maximum (Imax) and minimum (Imin) irradiances found between the 9 points described:

$$OBJ1 = \frac{Imax - Imin}{Imax + Imin} \cdot 100 \ [\%]$$

**Objective 2** is defined as the mean of the deviation from the total solar irradiance at the 5 selected points. This restriction is implemented by the following formula:

$$OBJ2 = \frac{\sum_{5\,points} \frac{Total\,Irr - SUNtot}{SUNtot}}{5} \cdot 100 \ [\%]$$

**Objective 3** represents the sum of the number of 'erroneous' ranges (in which the spectral coupling 0.875-1.125 established by the standard is not met) existing in each of the 9 selected points. This restriction is implemented by the following formula:

$$OBJ3 = \sum_{9\,p} \sum_{6\,int} wrong = \begin{cases} 1, & Invalid\ coupling \\ 0, & Coupling\ between\ 0.875\ and\ 1.125 \end{cases}$$

To obtain a light fixture (1) belonging to class A+A+ in spatial uniformity and spectral coupling, the OBJ1 must be less than 1 and the OBJ3 must be 0. The minimization of the OBJ2, on the other hand, ensures that the configuration of the light fixture (1) allows to achieve an average irradiance close to 1 sun, that is, the irradiance of the spectrum AM1.5G.

## 3. Optimization process

Once geometry and objective function have been established, the problem can be narrowed down with the following mathematical characteristics:

- It is Mixed, i. e., it contains a mixture of integer and continuous variables.
- It is Multiobjective, that is, it seeks to minimize several objectives simultaneously, specifically three.
- It has linear restrictions, for example: we want the total number of LEDs not to exceed 40.

The particular genetic algorithm used in this example to solve this problem belongs to the family of the NSGA (*Non-dominated Sorting Genetic Algorithm*). These algorithms are based on generating a population of many diverse individuals (vectors of variables such as the one described above) and applying two types of transformations to them:

- *Crossover:* mixture between individuals in the population.

- Mutation: random and single variations of its parameters.

*"Generation"* is defined as the population of individuals obtained as a result of each transformation of the previous one. In each iteration, those unfavorable individuals must be excluded according to the defined objectives, and benefiting those who allow them to be minimized, emulating the natural evolutionary process of life.

Through successive *'generations',* the individuals of the conserved population will evolve towards configurations that will get closer and closer to the goal set for these three objectives.

Starting with an initial population of 10,000 individuals, after 100 generations, a class A+A+ light fixture is obtained that meets the established criteria, its specific values being:

- OBJ1 (spatial non-uniformity): 0.836%
- OBJ2 (mean deviation with respect to the total irradiance of the sun): 0.680%
- OBJ3 (invalid ranges in spectral coupling): 0

The solution is shown by FIG. 6, where the position of each of the LEDs (2) in the light fixture (1) is shown graphically by means of a color code that represents the type of LED (2). In the lower right part of this figure, a bar graph is added that represents the current intensities assigned to each type of LED, in orange, superimposed on blue bars that indicate their maximum possible value.

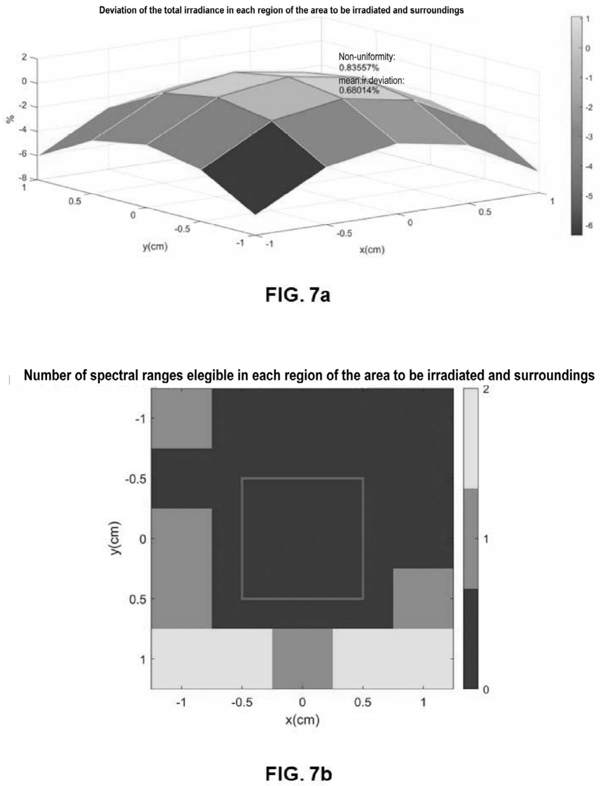

Figs. 7a and 7b respectively show by means of a color code the deviation in the total irradiance in percent in each region of the area to be irradiated (3) and the number of invalid spectral ranges in each region of the area to be irradiated (3).

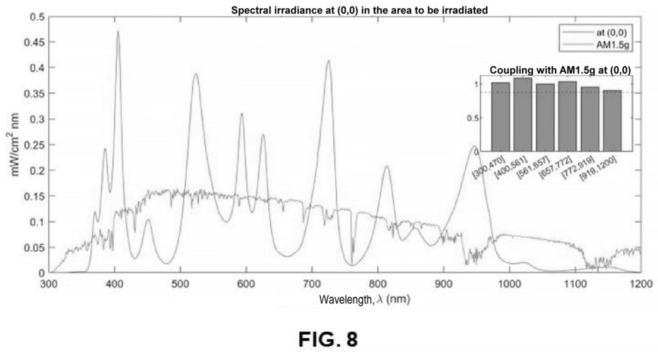

Fig. 8 shows the spectral irradiance at point (0, 0) of the area to be irradiated (3), an additional bar graph showing the coupling with the desired radiation curve AM1,5G at that point (0, 0) having been represented on the right side.

The last step of the described procedure would be the manufacture of the light fixture according to the calculated optimal configuration.

**Claims**

1. A computer-implemented method for determining the optimal configuration of a light fixture (1) formed by LEDs (2), it aims to obtain a desired spectral irradiance curve over an area to be irradiated (3), where the light fixture (1) lacks additional optical elements to its own LEDs (2), **characterized in that it** comprises:

    - building an objective function that calculates, depending on the geometry of the light fixture (1) and the area to be irradiated (3), and on a configuration of the light fixture (1) that includes the total number of LEDs (2) of the light fixture (1) as well as, for each of said LEDs (2), the type, position and intensity of current that passes through it, a spectral irradiance curve at various points of the area to be irradiated (3) that corresponds to said configuration of said light fixture (1);
    - applying a genetic algorithm to optimize the objective function in order to minimize a deviation between the calculated spectral irradiance curve and the desired spectral irradiance curve, as well as a spatial inhomogeneity of the calculated spectral irradiance curve at said points of the area to be irradiated (3), the light fixture (1) comprising only LEDs (2) from a predetermined LED (2) database; and
    - obtaining the optimal configuration of the light fixture (1), which includes the optimal total number of LEDs (2) of the light fixture (1) as well as, for each of said LEDs (2), the type, position and intensity of current that passes through it.

2. The method according to claim 1, wherein the light fixture (1) is flat and the area to be irradiated (3) is also flat, both being located in parallel planes.

3. The method according to any one of the preceding claims, further comprising establishing a restriction relative to a minimum allowed distance between LEDs (2).

4. The method according to any one of the preceding claims, further comprising establishing a restriction relative to a maximum number of LEDs (2) of the light fixture.

5. The method according to any one of the preceding claims, further comprising establishing a restriction relative to the maximum allowed difference between the calculated spectral irradiance curve and the desired spectral irradiance curve.

6.  The method according to any one of the preceding claims, further comprising establishing a restriction relative to the minimum desired spectral coverage, being defined as the existence of a certain minimum of irradiance in each subrange of wavelengths within a desired spectral range.

7.  The method according to any one of the preceding claims, wherein the genetic algorithm employed is an NSGA (Non-dominated Sorting Genetic Algorithm) algorithm.

8.  A computer program comprising instructions which, when the program is executed by a computer, cause the computer to carry out the method of any one of claims 1-7.

9.  A computer-readable storage medium comprising instructions which, when executed by a computer, cause the computer to carry out the method of any one of claims 1-7.

**FIG. 1**

**FIG. 2**

**FIG. 3**

**FIG. 4**

FIG. 5a　　FIG. 5b

FIG. 6

Deviation of the total irradiance in each region of the area to be irradiated and surroundings

**FIG. 7a**

Number of spectral ranges elegible in each region of the area to be irradiated and surroundings

**FIG. 7b**

**FIG. 8**

# INTERNATIONAL SEARCH REPORT

| International application No. |
| --- |
| PCT/ES2024/070283 |

**A. CLASSIFICATION OF SUBJECT MATTER**

See extra sheet

According to International Patent Classification (IPC) or to both national classification and IPC

**B. FIELDS SEARCHED**

Minimum documentation searched (classification system followed by classification symbols)
H05B, G06N, F21S

Documentation searched other than minimum documentation to the extent that such documents are included in the fields searched

Electronic data base consulted during the international search (name of data base and, where practicable, search terms used)

AbS, WPIAP, Internet

**C. DOCUMENTS CONSIDERED TO BE RELEVANT**

| Category* | Citation of document, with indication, where appropriate, of the relevant passages | Relevant to claim No. |
| --- | --- | --- |
| X | CN 104539362 A (UNIV BEIJING SCIENCE & TECH) 22/04/2015, paragraphs 4, 7-12, 6-15, 36-38, claim 1; figs. 2 and 3. | 1-9 |
| A | WO 2011154756 A2 (WEMONT KFT ET AL.) 15/12/2011, claims 1, 3, 4 and 6. | 1-9 |
| A | CN 110147888 A (TENCENT TECHNOLOGY (SHENZHEN) CO., LTD.) 20/08/2019, claim 6. | 1-9 |
| A | CN 110457805 A (CHANGZHOU INST TECHNOLOGY) 15/11/2019, pág. 4, paragraph 2. | 1-9 |

☒ Further documents are listed in the continuation of Box C.       ☒ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance. | |
| "E" | earlier document but published on or after the international filing date | |
| "L" | document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" | document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" | document published prior to the international filing date but later than the priority date claimed | |
| | | "&" document member of the same patent family |

| Date of the actual completion of the international search | Date of mailing of the international search report |
| --- | --- |
| 17/06/2024 | **(02/07/2024)** |

| Name and mailing address of the ISA/ | Authorized officer |
| --- | --- |
| OFICINA ESPAÑOLA DE PATENTES Y MARCAS Paseo de la Castellana, 75 - 28071 Madrid (España) Facsimile No.: 91 349 53 04 | C. Ortíz Martínez |
| | Telephone No. 913498463 |

Form PCT/ISA/210 (second sheet) (July 2022)

## INTERNATIONAL SEARCH REPORT

| International application No. |
| --- |
| PCT/ES2024/070283 |

| C (continuation). | DOCUMENTS CONSIDERED TO BE RELEVANT | |
| --- | --- | --- |
| Category * | Citation of documents, with indication, where appropriate, of the relevant passages | Relevant to claim No. |
| A | NASKARI, VASILIKI et al.: "Design and implementation of an indoors light simulator". 2022 7th South-east Europe Design Automation, Computer Engineering, Computer Networks And Social Media Conference (SEEDA-CECNSM), 23/09/2022, pages 1-6 [on line][retrieved on 07/06/2024]. Retrieved of <URL: https://ieeexplore.ieee.org/document/9932899>, <DOI: 10.1109/SEEDA-CECNSM57760.2022.9932899> the whole document. | 1-9 |

Form PCT/ISA/210 (continuation of second sheet) (July 2022)

## INTERNATIONAL SEARCH REPORT

Information on patent family members

International application No.

PCT/ES2024/070283

| Patent document cited in the search report | Publication date | Patent family member(s) | Publication date |
|---|---|---|---|
| CN104539362 A | 22.04.2015 | CN104539362B B | 22.02.2017 |
| WO2011154756 A2 | 15.12.2011 | HUP1000303 A2<br>HU230914 B1 | 28.03.2012<br>28.02.2019 |
| CN110457805 A | 15.11.2019 | NONE | |
| CN110147888 A | 20.08.2019 | CN110147888 B | 20.06.2023 |

Form PCT/ISA/210 (patent family annex) (July 2022)

## INTERNATIONAL SEARCH REPORT

International application No.

PCT/ES2024/070283

CLASSIFICATION OF SUBJECT MATTER

*H05B45/44* (2020.01)
*G06N3/126* (2023.01)
*F21S8/00* (2006.01)
*H05B45/44* (2020.01)
*G06N3/126* (2023.01)
*F21S8/00* (2006.01)

Form PCT/ISA/210 (extra sheet) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2507440 A1
- WO 2013105046 A1